# EUROPEAN PATENT APPLICATION

(11) **EP 2 945 436 A1**
(43) Date of publication of application: **18.11.2015**
(21) Application number: 13871068.6
(22) Date of filing: 10.01.2013
(51) Int. Cl.: H04W 52/04

(54) **METHOD, USER EQUIPMENT AND BASE STATION FOR INFORMATION REPORTING IN DEVICE TO DEVICE COMMUNICATIONS**

(71) Applicant: Fujitsu Limited, Kawasaki-shi, Kanagawa 211-8588 (JP)
(72) Inventor: QIU, Tao, Beijing 100025 (CN); ZHOU, Hua, Beijing 100025 (CN); WU, Lianhai, Beijing 100025 (CN)
(74) Representative: Lewin, David Nicholas
(86) International application number: PCT/CN2013/070334
(87) International publication number: WO 2014/107870

(57) **Abstract**

Embodiments of the present disclosure provide a method for reporting information of device to device communication, user equipment and a base station. The method for reporting information includes: transmitting, by UE to a base station, indication information indicating power preference of different communication links, the communication links comprising a D2D communication link between the UE and other UE, and/or a cellular communication link between the UE and the base station. With the embodiments of the present disclosure, the network side may provide corresponding configuration regarding properties of services of different communication links according to the indication information, thereby controlling the power consumption of the UE more efficiently.

## Description

### Technical Field

The present disclosure relates to the field of communications, and in particular to a method for reporting information of device to device communication, user equipment and a base station.

### Background

Device to device (D2D) communication refers to direct communication between user equipment (UE), which may efficiently improve a spectral efficiency of a wireless system and lower control signaling overhead. As continuous development of wireless traffics, using the D2D communication to provide services to UE has become a necessary tendency of future development of wireless communications.

As services of UE continuously change over time, properties of different services have many effects on power consumption of the UE. If a network side may acquire information on properties of the services of the UE, it may provide suitable configuration for the UE, thereby lowering power consumption of the UE. It is a very efficient method that the UE provides auxiliary information on the properties of the services to the network side.

In a process of standardization of LTE Rel-11, 1 bit of auxiliary information of UE, power preference indication, was introduced for a variety of the properties of the services of the UE, so as to realize power saving of the UE. The power preference indication enables the UE to reflect whether it needs to save power according to the properties of current services.

However, the inventors found in the existing solution that the power preference indication was proposed only for a cellular link of the UE. If the UE supports a D2D link and a cellular link at the same time, the network side is hard to differentiate whether the D2D link or the cellular link needs to save power according only to the 1 bit of power preference indication, thereby not capable of efficiently providing suitable configuration for the UE.

It should be noted that the above description of the background is merely provided for clear and complete explanation of the present disclosure and for easy understanding by those skilled in the art. And it should not be understood that the above technical solution is known to those skilled in the art as it is described in the background of the present disclosure.

### Summary

Embodiments of the present disclosure provide a method for reporting information of device to device communication, user equipment and a base station, with an object being to add new control information on a basis of existing power preference indication, so as to differentiate an object to which the power preference indication is directed, that is, a D2D communication link or a cellular link.

According to an aspect of the embodiments of the present disclosure, there is provided a method for reporting information of D2D communication, including:
transmitting, by UE to a base station, indication information indicating power preference of different communication links; the communication links including a D2D communication link between the UE and other UE, and/or a cellular communication link between the UE and the base station.

According to another aspect of the embodiments of the present disclosure, there is provided a method for reporting information of D2D communication, including:
receiving, by a base station, indication information indicating power preference of different communication links; the communication links comprising a D2D communication link between UE and other UE, and/or a cellular communication link between the UE and the base station; and
configuring the UE according to the indication information.

According to a further aspect of the embodiments of the present disclosure, there is provided a method for reporting information of D2D communication, including:
transmitting, by a source base station to a target base station, indication information indicating power preference of different communication links, when UE is handed over from the source base station to the target base station, the communication links including a D2D communication link between the UE and other UE, and/or a cellular communication link between the UE and the target base station.

According to still another aspect of the embodiments of the present disclosure, there is provided UE, including:
a first transmitting unit, configured to transmit indication information indicating power preference of different communication links to a base station, the communication links including a D2D communication link between the UE and other UE, and/or a cellular communication link between the UE and the base station.

According to still another aspect of the embodiments of the present disclosure, there is provided a base station, including:
a receiving unit, configured to receive indication information indicating power preference of different communication links, the communication links including a D2D communication link between UE and other UE, and/or a cellular communication link between the UE and the base station; and
a configuring unit, configured to configure the UE according to the indication information.

According to still another aspect of the embodiments of the present disclosure, there is provided a base station, including:
a transmitting unit, configured to transmit indication information indicating power preference of different communication links to a target base station, when UE is handed over from the base station to the target base station, the communication links including a D2D communication link between the UE and other UE, and/or a cellular communication link between the UE and the target base station.

According to still another aspect of the embodiments of the present disclosure, there is provided a communication system, including the UE as described above and the base station as described above.

According to still another aspect of the embodiments of the present disclosure, there is provided a computer-readable program, wherein when the program is executed in UE, the program enables a computer to carry out the method for reporting information of D2D communication as described in the above embodiments in the UE.

According to still another aspect of the embodiments of the present disclosure, there is provided a storage medium in which a computer-readable program is stored, wherein the computer-readable program enables a computer to carry out the method for reporting information of D2D communication as described in the above embodiments in UE.

According to still another aspect of the embodiments of the present disclosure, there is provided a computer-readable program, wherein when the program is executed in a base station, the program enables a computer to carry out the method for reporting information of D2D communication as described in the above embodiments in the base station.

According to still another aspect of the embodiments of the present disclosure, there is provided a storage medium in which a computer-readable program is stored, wherein the computer-readable program enables a computer to carry out the method for reporting information of D2D communication as described in the above embodiments in a base station.

An advantage of the embodiments of the present disclosure exists in that with the indication information indicating power preference of different communication links, the network side may provide corresponding configuration for properties of services of different communication links according to the indication information, thereby controlling power consumption of the UE more efficiently.

With reference to the following description and drawings, the particular embodiments of the present disclosure are disclosed in detail, and the principles of the present disclosure and the manners of use are indicated. It should be understood that the scope of the embodiments of the present disclosure is not limited thereto. The embodiments of the present disclosure contain many alternations, modifications and equivalents within the scope of the terms of the appended claims.

Features that are described and/or illustrated with respect to one embodiment may be used in the same way or in a similar way in one or more other embodiments and/or *A* in combination with or instead of the features of the other embodiments.

It should be emphasized that the term "comprises/comprising/includes/including" when used in this specification is taken to specify the presence of stated features, integers, steps or components but does not preclude the presence or addition of one or more other features, integers, steps, components or groups thereof.

### Brief Description of the Drawings

Many aspects of the disclosure can be better understood with reference to the following drawings. The components in the drawings are not necessarily to scale, emphasis instead being placed upon clearly illustrating the principles of the present disclosure. To facilitate illustrating and describing some parts of the disclosure, corresponding portions of the drawings may be exaggerated or reduced in size.

Elements and features depicted in one drawing or embodiment of the disclosure may be combined with elements and features depicted in one or more additional drawings or embodiments. Moreover, in the drawings, like reference numerals designate corresponding parts throughout the several views and may be used to designate like or similar parts in more than one embodiment.
Figure 1 is a schematic diagram of performing D2D communication between UE in a cellular network;
Figure 2 is a flowchart of a method for reporting information of Embodiment 1 of the present disclosure;
Figure 3 is a flowchart of a method for reporting information of Embodiment 2 of the present disclosure;
Figure 4 is a flowchart of a method for reporting information of Embodiment 3 of the present disclosure;
Figure 5 is a flowchart of a method for reporting information of Embodiment 4 of the present disclosure;
Figure 6 is a flowchart of a method for reporting information of Embodiment 5 of the present disclosure;
Figure 7 is a schematic diagram of the structure of UE of Embodiment 6 of the present disclosure;
Figure 8 is another schematic diagram of the structure of UE of Embodiment 6 of the present disclosure;
Figure 9 is a schematic diagram of the structure of a base station of Embodiment 7 of the present disclosure; and
Figure 10 is a schematic diagram of the structure of a base station of Embodiment 8 of the present disclosure.

### Detailed Description

The foregoing and other features of the present disclosure shall become apparent from the following description with reference to the accompanying drawings. Particular embodiments of the present disclosure are disclosed in the description and drawings, which indicate part of the embodiments that may employ the principles of the present disclosure. It should be understood that the present disclosure is not limited to the described embodiments, on the contrary, the present disclosure includes all the modifications, variations and equivalents falling within the scope of the appended claims.

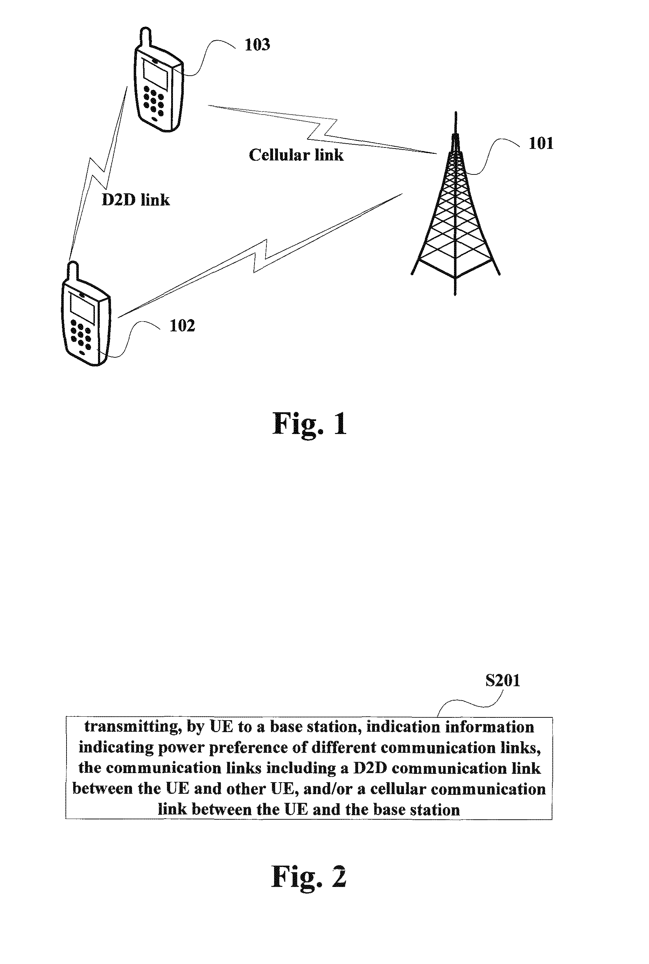

Fig. 1 is a schematic diagram of performing D2D communication between UE in a cellular network. As shown in Fig. 1, besides performing communication via base station services, cell users may also perform direct communication via D2D links.

As shown in Fig. 1, UE 102 (UE1) and paired UE 103 (UE2) are served by a base station 101 (eNB 1), data between the UE1 and UE2 need not to be transmitted via the eNB 1 and a core network, and control signaling may still be transmitted by the eNB1.

In order to provide UE with suitable configuration, the UE needs to provide auxiliary information on properties of services, power preference indication, to a network side, so as to indicate whether a current communication link needs to save power. Therefore, the network side may acquire information on the properties of the services of the UE, and then provide the UE with suitable configuration, thereby lowering power consumption of the UE.

The present disclosure shall be described below in detail taking the scenario shown in Fig. 1 as an example. However, the present disclosure is not limited thereto. For example, there may exist multiple D2D communication links, and the UE1 may perform D2D communication with multiple pieces of other UE at the same time.

### Embodiment 1

An embodiment of the present disclosure provides a method for reporting information of D2D communication, which shall be described from a UE side. Fig. 2 is a flowchart of the method for reporting information of an embodiment of the present disclosure. As shown in Fig. 2, the method for reporting information includes:
step 201: transmitting, by UE to a base station, indication information indicating power preference of different communication links, the communication links including a D2D communication link between the UE and other UE, and/or a cellular communication link between the UE and the base station.

In this embodiment, there could be one or more piece(s) of the other UE, and correspondingly, the communication links may include one or more D2D communication link(s), that is, there could be one or more of the D2D communication link(s). The indication information may indicate different power preferences for different communication links, hence, whether a D2D communication link or a cellular communication link needs to save power may be differentiated. And the indication information may be transmitted via a specific message of an RRC layer or an MAC layer.

In an implementation, the indication information may at least include power preference information and control information, and the control information may indicate whether a communication link is a D2D communication link or a cellular communication link.

In particular implementation, the power preference information may be realized by using 1 bit, and may be used to indicate whether power preference of a communication link is "low power consumption" or "normal power consumption"; for example, "0" is used to indicate normal power consumption, and "1" is used to indicate low power consumption.

And power preference indication of the cellular communication link may be set, and identification of the cellular link may be contained in the control information; and power preference indication of the D2D communication link may be set, and identification of the D2D link may be contained in the control information. In this way, the power preferences of the D2D communication link and of the cellular communication link may be differentiated.

In this embodiment, there may exist two implementations for indicating the cellular communication link and the D2D communication link: (1) 1 bit of information explicitly identifying whether it is a cellular communication link or a D2D communication link; for example, "0" is used to indicate a cellular communication link, and "1" is used to indicate a D2D communication link; and (2) implicitly identifying whether it is a cellular communication link or a D2D communication link; for example, if the indication information contains identification of a D2D communication link, it indicates that it belongs to power preference of a D2D communication link; otherwise, it belongs to power preference of a cellular communication link.

In another implementation, the indication information may at least include information on power preference, or the indication information may at least include information on power preference and the identification information of a D2D communication link. And it may be indicated that a communication link is a D2D communication link or a cellular communication link by a message carrying the indication information.

More particularly, the message may be a specific message of D2D communication, such as a message of an RRC layer or an MAC layer. Therefore, the message may be used to indicate whether a communication link is a D2D communication link or a cellular communication link.

In particular implementation, the power preference indication of the D2D communication may be set, and the D2D link identification may be contained in the control information. And for a cellular communication link, the relevant art may still be employed.

It should be noted that the indication information used for indicating power preference of different communication links are illustrated above. However, the present disclosure is not limited thereto, and a particular implementation may be determined according to an actual situation.

It can be seen from the above embodiment that the indication information may not only indicate a particular communication link, but also indicate power preference of a corresponding communication link. Hence, the network side may provide corresponding configuration regarding properties of services of different communication links according to the indication information, thereby controlling the power consumption of the UE more efficiently.

### Embodiment 2

Based on Embodiment 1, an embodiment of the present disclosure further provides a method for reporting information of D2D communication, with the contents identical to those of Embodiment 1 being not going to be described any further.

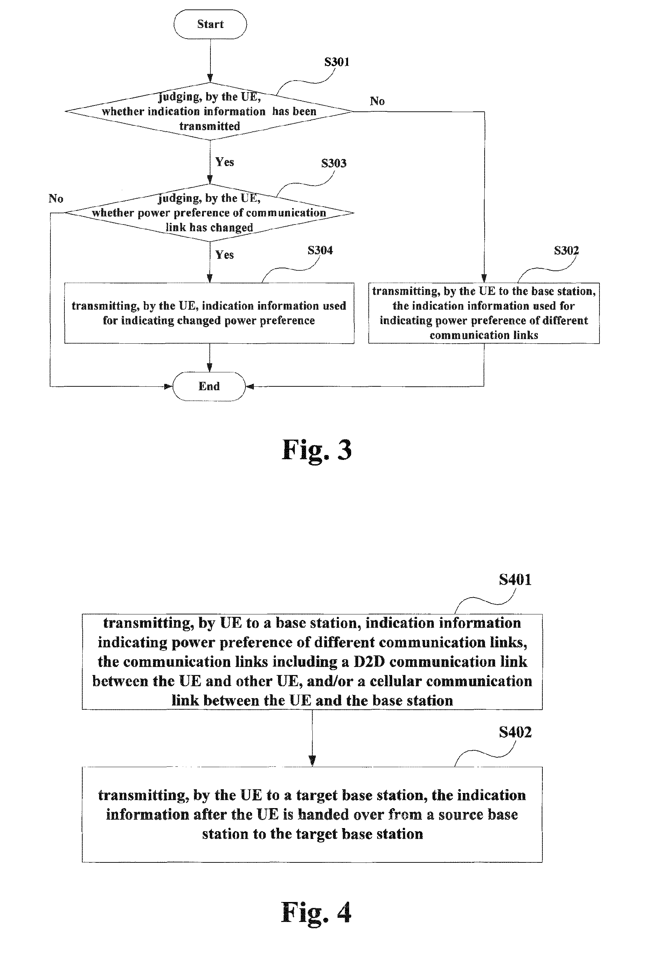

Fig. 3 is a flowchart of the method for reporting information of an embodiment of the present disclosure. As shown in Fig. 3, the method for reporting information includes:
step 301: judging, by the UE, whether the indication information used for indicating power preference of different communication links has been transmitted, executing step 302 when it is judged no, and executing step 303 when it is judged yes;
step 302: transmitting, by the UE to the base station, the indication information used for indicating power preference of different communication links, the communication links including a D2D communication link between the UE and other UE, and/or a cellular communication link between the UE and a base station;
   in this embodiment, the UE transmits the indication information used for indicating power preference of different communication links to the base station only when the UE judges that the indication information has not been transmitted; and the UE judges further when it judges that the indication information has been transmitted (that is, the indication information is not transmitted for the first time);
step 303: judging, by the UE, whether the power preference of the communication link has changed, executing step 304 when a result of judgment is that the power preference has changed, and transmitting no indication information used for indicating power preference by the UE when the result of judgment is that the power preference has not changed;
   in this embodiment, the result of judgment being that the power preference has changed may refer to that power preference of one or more communication link(s) has changed, and the result of judgment being that the power preference has not changed may refer to that power preference of all communication links has not changed; however, the present disclosure is not limited thereto, and a particular implementation may be determined according to an actual situation;
step 304: transmitting, by the UE, indication information used for indicating changed power preference.

In this embodiment, for example, for a certain D2D communication link, the UE has transmitted power preference indication to the base station, such as using "0" to indicate that normal power consumption is used. If the power preference does not change, the UE transmits indication information to the base station no longer; and if the power preference changes, the UE transmits indication information to the base station, such as containing power preference indication "1" to indicate to use low power consumption.

Therefore, in a case where indication information has been transmitted, when the power preference of the communication link changes, the UE transmits indication information used for indicating the changed power preference, thereby achieving dynamic update of the indication information along with the change of the power preference of the communication link, and enabling the UE to obtain punctual and efficient configuration.

When the power preference of the communication link does not change, the configuration of the UE may not be adjusted. Hence, the UE needs not to transmit the same indication information on power preference again, thereby lowering power consumption resulted from an action of transmission. However, the present disclosure is not limited thereto, and the base station may change configuration of the UE according to other conditions.

In an implementation, when the communication link is a D2D communication link, UE in the same D2D communication link may report the indication information to the base station respectively.

For example, referring to Fig. 1, in a case where a D2D communication link is established between UE 102 and UE 103, the UE 102 and the UE 103 may report the indication information to the base station respectively.

In another implementation, in order to save power consumption of reporting information, UE in the same D2D communication link may negotiate with each other, so as to determine to perform an action of transmitting the indication information by one piece of the UE.

For example, referring to Fig. 1, in a case where a D2D communication link is established between UE 102 and UE 103, the UE 102 and the UE 103 may negotiate with each other, so as to determine that one piece of the UE 102 and the UE 103 (such as the UE 102) transmits the indication information to the base station 101.

It can be seen from the above embodiment that the indication information may not only indicate a particular communication link, but also indicate power preference of a corresponding communication link. Hence, the network side may provide corresponding configuration regarding properties of services of different communication links according to the indication information, thereby controlling the power consumption of the UE more efficiently.

### Embodiment 3

Based on embodiments 1 and 2, an embodiment of the present disclosure further provides a method for reporting information of D2D communication, which shall be described in a case where UE is handed over from a source base station to a target base station; wherein, the contents identical to those of embodiments 1 and 2 are not going to be described any further.

Fig. 4 is a flowchart of the method for reporting information of an embodiment of the present disclosure. As shown in Fig. 4, the method for reporting information includes:
step 401: transmitting, by UE to a base station, indication information indicating power preference of different communication links, the communication links including a D2D communication link between the UE and other UE, and/or a cellular communication link between the UE and the base station; and
step 402: transmitting, by the UE to a target base station, the indication information after the UE is handed over from a source base station to the target base station.

In this embodiment, the UE may be handed over between different base stations. If the UE has transmitted the indication information to the source base station within a period of time before receiving a handover command, the UE is permitted to transmit the indication information to the target base station again.

For example, before the handover, the UE may have transmitted the indication information used for indicating the power preference of different communication links to the source base station, but the source base station has not transmitted the indication information to the target base station in time. After the completion of the handover, the UE may transmit the indication information to the target base station again.

As described in Embodiment 2, in a normal case, the UE will not transmit identical power preference indication to the base station. However, in this embodiment, different from the normal case, in a case where handover occurs, the UE may transmit identical power preference indication to the target base station.

It can be seen from the above embodiment that with the indication information used for indicating power preference of different communication links, the network side may provide corresponding configuration regarding properties of services of different communication links according to the indication information, thereby controlling the power consumption of the UE more efficiently.

### Embodiment 4

An embodiment of the present disclosure provides a method for reporting information of D2D communication, which shall be described from a base station side; wherein, the contents identical to those of embodiments 1 and 2 are not going to be described any further.

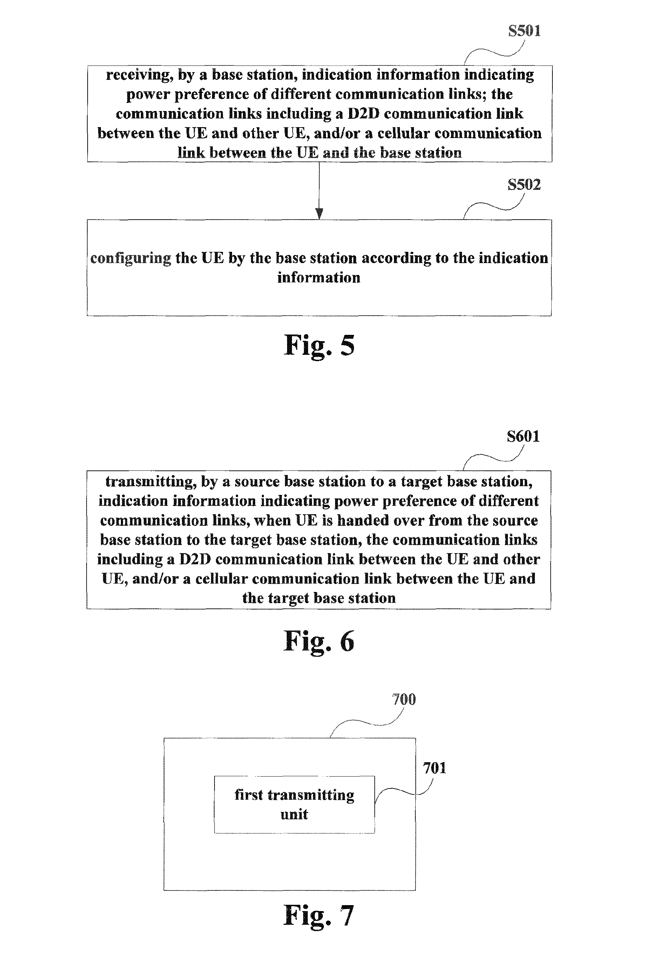

Fig. 5 is another flowchart of the method for reporting information of an embodiment of the present disclosure. As shown in Fig. 5, the method for reporting information includes:
step 501: receiving, by a base station, indication information indicating power preference of different communication links; the communication links including a D2D communication link between the UE and other UE, and/or a cellular communication link between the UE and the base station; and
step 502: configuring the UE by the base station according to the indication information.

In this embodiment, the indication information indicating power preference of different communication links may be transmitted by the UE, and may also be transmitted by other base stations.

In an implementation, the indication information is transmitted by the UE, and the method further includes: receiving, by the base station, indication information transmitted by the other UE; and configuring the UE and the other UE by the base station according to the indication information transmitted by the UE and the indication information transmitted by the other UE.

In particular implementation, the base station may receive not only the indication information transmitted by a certain piece of UE, but also the indication information transmitted by another piece of UE establishing a D2D communication link with the UE.

For example, referring to Fig. 1, in a case where a D2D communication link is established between the UE 102 and the UE 103, the base station 101 may receive the indication information transmitted by the UE 102 and the indication information transmitted by the UE 103, and configure the UE 102 and the UE 103 according to the indication information transmitted by the UE 102 and the indication information transmitted by the UE 103.

In another implementation, the indication information is transmitted by one piece of the UE and the other UE, and the method further includes: configuring the UE and the other UE by the base station according to the indication information.

In particular implementation, power preference may be negotiated between UE in the same D2D link, the indication information is transmitted by one piece of the UE, and negotiation signaling is transmitted in the D2D link. The base station receives only the indication transmitted by the UE, and configures the UE and the other UE establishing the D2D communication link with the UE according to the indication information.

For example, referring to Fig. 1, in a case where a D2D communication link is established between the UE 102 and the UE 103, the UE 102 may transmit the indication information after negotiation between the UE 102 and the UE 103. The base station 101 may receive the indication information transmitted by the UE 102, and configures the UE 102 and the UE 103 according to the indication information transmitted by the UE 102.

In another implementation, the indication information may also be transmitted by another base station. In this implementation, when the UE is handed over from a source base station to a target base station (i.e. the base station in step 501), the indication information may be transmitted by the source base station to the target base station via an inter-base station interface, such as an X2 interface, or other wired or wireless interfaces.

Therefore, the source base station transmits the indication information to the target base station, the indication information including power preference of different communication links; wherein the communication link is a D2D communication link between the UE and the other UE, or a cellular communication link between the UE and the base station

It can be seen from the above embodiment that with the indication information used for indicating power preference of different communication links, the network side may provide corresponding configuration regarding properties of services of different communication links according to the indication information, thereby controlling the power consumption of the UE more efficiently.

### Embodiment 5

An embodiment of the present disclosure provides a method for reporting information of D2D communication, which shall be described from a base station side; wherein, the contents identical to those of Embodiment 3 are not going to be described any further.

Fig. 6 is another flowchart of the method for reporting information of an embodiment of the present disclosure. As shown in Fig. 6, the method for reporting information includes:
step 601: transmitting, by a source base station to a target base station, indication information indicating power preference of different communication links, when UE is handed over from the source base station to the target base station, the communication links including a D2D communication link between the UE and other UE, and/or a cellular communication link between the UE and the target base station.

Therefore, the source base station transmit the indication information to a current base station, so that power preference of different communication links and the communication link being a D2D communication link between the UE and other UE or a cellular communication link between the UE and the base station may be indicated to the current base station.

It can be seen from the above embodiment that with the indication information used for indicating power preference of different communication links, the network side may provide corresponding configuration regarding properties of services of different communication links according to the indication information, thereby controlling the power consumption of the UE more efficiently.

### Embodiment 6

An embodiment of the present disclosure provides UE, which is applicable to D2D communication. This embodiment corresponds to the method for reporting information of D2D communication described in embodiments 1-3, with the contents identical to those of embodiments 1-3 being not going to be described any further.

Fig. 7 is a schematic diagram of the structure of UE of Embodiment 6 of the present disclosure. As shown in Fig. 7, the UE 700 includes a first transmitting unit 701. The relevant art may be referred to for other parts of the UE 700.

In this embodiment, the first transmitting unit 701 transmits indication information indicating power preference of different communication links to a base station, the communication links including a D2D communication link between the UE and other UE, and/or a cellular communication link between the UE and the base station.

In an implementation, the indication information may include power preference information, and control information used for indicating that the communication link is a D2D communication link or a cellular communication link.

In another implementation, the indication information may include power preference information, or may further contain identification information used for indicating a D2D communication link. And it may be indicated that a communication link is a D2D communication link or a cellular communication link by a message carrying the indication information.

In particular, the message may be a specific message of D2D communication, such as a message of an RRC layer or an MAC layer.

Therefore, the indication information may not only indicate a particular communication link, but also indicate power preference of a corresponding communication link. Hence, the network side may provide corresponding configuration regarding properties of services of different communication links according to the indication information, thereby controlling the power consumption of the UE more efficiently.

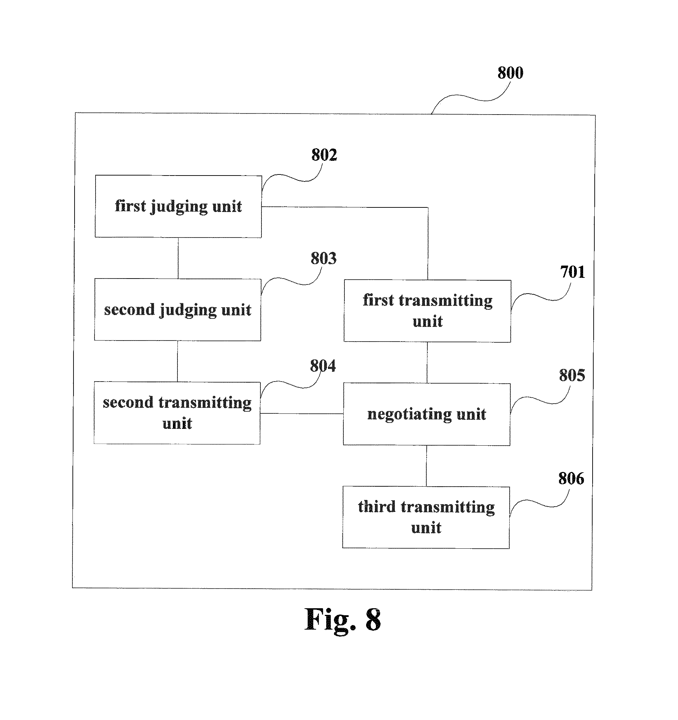

Fig. 8 is another schematic diagram of the structure of the UE of an embodiment of the present disclosure. As shown in Fig. 8, the UE 800 includes a first transmitting unit 701, as described above.

As shown in Fig. 8, the UE 800 may further include a first judging unit 802 configured to judge whether the indication information has been transmitted; and the first transmitting unit 701 transmits the indication information to the base station if a result of judgment of the first judging unit 802 is that the indication information has not been transmitted.

As shown in Fig. 8, the UE 800 may further include a second judging unit 803 and a second transmitting unit 804.

In this embodiment, the second judging unit 803 judges whether the power preference of the communication link has changed when the result of judgment of the first judging unit 802 is that the indication information has been transmitted, and the second transmitting unit 804 transmits the indication information used for indicating changed power preference if the power preference of the communication links has changed, the indication information having been updated according to the changed power preference.

Therefore, in a case where the indication information has been transmitted, when the power preference of the communication link changes, the UE transmits the indication information used for indicating changed power preference, thereby achieving dynamic update of the indication information along with the change of the power preference of the communication link, and enabling the UE to obtain punctual and efficient configuration; and when the power preference of the communication link does not change, the configuration of the UE may not be adjusted. Hence, the UE needs not to transmit the same indication information on power preference again, thereby lowering power consumption resulted from an action of transmission.

As shown in Fig. 8, the UE 800 may further include a negotiating unit 805 configured to negotiate power preference with the other UE, so as to determine that one piece of the UE and the other UE transmits the indication information.

In this embodiment, the UE 800 may negotiate with the other UE in the same D2D communication link via the negotiating unit 805, so as to determine that the UE 800 performs an action of transmitting the indication information, thereby lowering power consumption resulted from the action of transmission.

In this embodiment, the UE 800 may further include a third transmitting unit 806 configured to transmit the indication information to a target base station after the UE is handed over from a source base station to the target base station.

In particular, if the indication information has been transmitted by the UE to the source base station within a period of time before a handover command is received, the third transmitting unit is permitted to transmit again identical or different indication information to the target base station.

It can be seen from the above embodiment that with the indication information used for indicating power preference of different communication links, the network side may provide corresponding configuration regarding properties of services of different communication links according to the indication information, thereby controlling the power consumption of the UE more efficiently.

### Embodiment 7

An embodiment of the present disclosure provides a base station, which is applicable to D2D communication. This embodiment corresponds to the method for reporting information of D2D communication described in Embodiment 4, with the contents identical to those of Embodiment 4 being not going to be described any further.

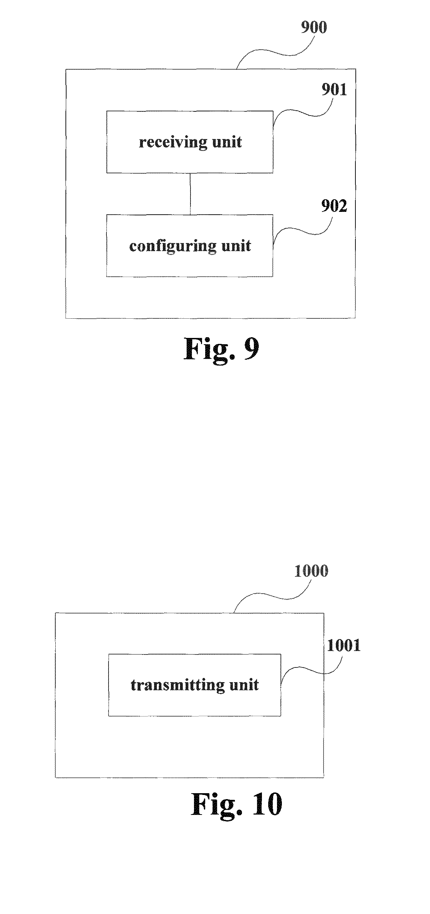

Fig. 9 is a schematic diagram of the structure of a base station of an embodiment of the present disclosure. As shown in Fig. 9, the base station 900 includes: a receiving unit 901 and a configuring unit 902. The relevant art may be referred to for other parts of the base station 900.

In this embodiment, the receiving unit 901 receives indication information indicating power preference of different communication links, the communication links including a D2D communication link between the UE and other UE, and/or a cellular communication link between the UE and the base station, and the configuring unit 902 configures the UE according to the indication information.

Therefore, the base station 900 may perform suitable power configuration on a corresponding communication link according to power preference of different communication links and types of communication links (for example, whether a communication link is a D2D communication link between the UE and the other UE or a cellular communication link between the UE and the base station).

In an implementation, the indication information may be transmitted by a piece of UE, and the receiving unit 901 may further receive indication information transmitted by other UE. And the configuring unit 902 may configure the UE and the other UE according to the indication information transmitted by the UE and the indication information transmitted by the other UE.

In another implementation, the indication information may be transmitted by one piece of the UE and the other UE, and the configuring unit 902 may configure the UE and the other UE according to the indication information.

In a further implementation, the indication information may be transmitted by a source base station when the UE is handed over from the source base station to the base station.

It can be seen from the above embodiment that transmitting, by UE to a base station, indication information indicating power preference of different communication links, the communication links including a D2D communication link between the UE and other UE, and/or a cellular communication link between the UE and the base station.

### Embodiment 8

An embodiment of the present disclosure provides a base station, which is applicable to D2D communication. This embodiment corresponds to the method for reporting information of D2D communication described in Embodiment 5, with the contents identical to those of Embodiment 5 being not going to be described any further.

Fig. 10 is a schematic diagram of the structure of a base station of an embodiment of the present disclosure. As shown in Fig. 10, the base station 1000 includes: a transmitting unit 1001. The relevant art may be referred to for other parts of the base station 1000.

In this embodiment, the transmitting unit 1001 transmits indication information indicating power preference of different communication links to a target base station, when the UE is handed over from the base station to the target base station, the communication links including a D2D communication link between the UE and other UE, and/or a cellular communication link between the UE and the target base station.

In this embodiment, a case possibly occurs where the UE is handed over between base stations, that is, the UE is handed over from a current base station to a target base station. In such a case, the current base station may transmit the indication information to the target base station, so as to indicate power preference of different communication links and whether a communication link is a D2D communication link between the UE and other UE or a cellular communication link between the UE and a base station to the target base station.

An embodiment of the present disclosure further provides a communication system, including the UE as described in Embodiment 6 and the base station as described in Embodiment 7, or including the base station as described in Embodiment 7 and the base station as described in Embodiment 8.

An embodiment of the present disclosure further provides a computer-readable program, wherein when the program is executed in UE, the program enables a computer to carry out the method for reporting information of D2D communication as described in embodiments 1-3 in the UE.

An embodiment of the present disclosure further provides a storage medium in which a computer-readable program is stored, wherein the computer-readable program enables a computer to carry out the method for reporting information of D2D communication as described in embodiments 1-3 in UE.

An embodiment of the present disclosure further provides a computer-readable program, wherein when the program is executed in a base station, the program enables a computer to carry out the method for reporting information of D2D communication as described in Embodiment 4 or 5 in the base station.

An embodiment of the present disclosure further provides a storage medium in which a computer-readable program is stored, wherein the computer-readable program enables a computer to carry out the method for reporting information of D2D communication as described in Embodiment 4 or 5 in a base station.

The above apparatuses and methods of the present disclosure may be implemented by hardware, or by hardware in combination with software. The present disclosure relates to such a computer-readable program that when the program is executed by a logic device, the logic device is enabled to carry out the apparatus or components as described above, or to carry out the methods or steps as described above. The present disclosure also relates to a storage medium for storing the above program, such as a hard disk, a floppy disk, a CD, a DVD, and a flash memory, etc.

One or more functional blocks and/or one or more combinations of the functional blocks in Figures may be realized as a universal processor, a digital signal processor (DSP), an application-specific integrated circuit (ASIC), a field programmable gate array (FPGA) or other programmable logic devices, discrete gate or transistor logic devices, discrete hardware component or any appropriate combinations thereof. And they may also be realized as a combination of computing equipment, such as a combination of a DSP and a microprocessor, multiple processors, one or more microprocessors in communication combination with a DSP, or any other such configuration.

The present disclosure is described above with reference to particular embodiments. However, it should be understood by those skilled in the art that such a description is illustrative only, and not intended to limit the protection scope of the present disclosure. Various variants and modifications may be made by those skilled in the art according to the principles of the present disclosure, and such variants and modifications fall within the scope of the present disclosure.

## Claims

1. A method for reporting information of device to device (D2D) communication, comprising:
transmitting, by UE to a base station, indication information indicating power preference of different communication links, the communication links comprising a D2D communication link between the UE and other UE, and/or a cellular communication link between the UE and the base station.

2. The method according to claim 1, wherein the indication information comprises power preference information, and control information indicating that the communication link is a D2D communication link or a cellular communication link.

3. The method according to claim 1, wherein the indication information comprises power preference information, and it is indicated that the communication link is a D2D communication link or a cellular communication link by a message carrying the indication information.

4. The method according to claim 3, wherein the indication information further comprises identification information indicating a D2D communication link.

5. The method according to claim 3, wherein the message is a specific message of D2D communication.

6. The method according to claim 1, wherein the method further comprises:
judging, by the UE, whether the indication information has been transmitted; and
transmitting the indication information by the UE to the base station if a result of judgment is that the indication information has not been transmitted.

7. The method according to claim 6, wherein if the result of judgment is that the indication information has been transmitted, the method further comprises:
judging, by the UE, whether the power preference of the communication link has changed; and
updating, by the UE, the indication information according to changed power preference if the power preference of the communication links has changed, and transmitting updated indication information.

8. The method according to claim 1, wherein there is one or more piece(s) of the other UE, and the communication links comprise one or more D2D communication link(s).

9. The method according to claim 1, wherein the method further comprises:
negotiating, by the UE and the other UE, power preference to determine that one piece of the UE and the other UE transmits the indication information.

10. The method according to claim 1, wherein the method further comprises:
transmitting the indication information by the UE to a target base station after the UE is handed over from a source base station to the target base station.

11. The method according to claim 10, wherein if the indication information has been transmitted by the UE to the source base station within a period of time before a handover command is received, the UE is permitted to transmit again identical or different indication information to the target base station.

12. A method for reporting information of D2D communication, comprising:
receiving, by a base station, indication information indicating power preference of different communication links; the communication links comprising a D2D communication link between UE and other UE, and/or a cellular communication link between the UE and the base station; and
configuring the UE according to the indication information.

13. The method according to claim 12, wherein the indication information indicates power preference of a D2D communication link between the UE and the other UE and is transmitted by the UE, and the method further comprises:
receiving, by the base station, indication information transmitted by the other UE; and
configuring the UE and the other UE according to the indication information transmitted by the UE and the indication information transmitted by the other UE.

14. The method according to claim 12, wherein the indication information indicates power preference of a D2D communication link between the UE and the other UE and is transmitted by one piece of the UE and the other UE, and the method further comprises:
configuring the UE and the other UE according to the indication information.

15. The method according to claim 12, wherein the indication information is transmitted by a source base station when the UE is handed over from the source base station to the base station.

16. A method for reporting information of D2D communication, comprising:
transmitting, by a source base station to a target base station, indication information of UE indicating power preference of different communication links, when the UE is handed over from the source base station to the target base station, the communication links comprising a D2D communication link between the UE and other UE, and/or a cellular communication link between the UE and the target base station.

17. UE, comprising:
a first transmitting unit, configured to transmit indication information indicating power preference of different communication links to a base station, the communication links comprising a D2D communication link between the UE and other UE, and/or a cellular communication link between the UE and the base station.

18. The UE according to claim 17, wherein the UE further comprises:
a first judging unit, configured to judge whether the indication information has been transmitted;
and the first transmitting unit transmits the indication information to the base station if a result of judgment is that the indication information has not been transmitted.

19. The UE according to claim 18, wherein the UE further comprises:
a second judging unit, configured to judge whether the power preference of the communication link has changed when the result of judgment of the first judging unit is that the indication information has been transmitted; and
a second transmitting unit, configured to transmit the indication information updated according to changed power preference if the power preference of the communication links has changed.

20. The UE according to claim 17, wherein the UE further comprises:
a negotiating unit, configured to negotiate power preference with the other UE, so as to determine that one piece of the UE and the other UE transmits the indication information.

21. The UE according to claim 17, wherein the UE further comprises:
a third transmitting unit, configured to transmit the indication information to a target base station after the UE is handed over from a source base station to the target base station.

22. The UE according to claim 21, wherein if the indication information has been transmitted by the UE to the source base station within a period of time before a handover command is received, the third transmitting unit is permitted to transmit again identical or different indication information to the target base station.

23. A base station, comprising:
a receiving unit, configured to receive indication information indicating power preference of different communication links, the communication links comprising a D2D communication link between the UE and other UE, and/or a cellular communication link between the UE and the base station; and
a configuring unit, configured to configure the UE according to the indication information.

24. A base station, comprising:
a transmitting unit, configured to transmit indication information of UE indicating power preference of different communication links to a target base station, when the UE is handed over from the base station to the target base station, the communication links comprising a D2D communication link between the UE and other UE, and/or a cellular communication link between the UE and the target base station.

25. A communication system, comprising the UE as claimed in any one of claims 17-22 and the base station as claimed in claim 23,
or comprising the base station as claimed in claim 23 and the base station as claimed in claim 24.

26. A computer-readable program, wherein when the program is executed in UE, the program enables a computer to carry out the method for reporting information of D2D communication as claimed in any one of claims 1-11 in the UE.

27. A storage medium in which a computer-readable program is stored, wherein the computer-readable program enables a computer to carry out the method for reporting information of D2D communication as claimed in any one of claims 1-11 in UE.

28. A computer-readable program, wherein when the program is executed in a base station, the program enables a computer to carry out the method for reporting information of D2D communication as claimed in any one of claims 12-16 in the base station.

29. A storage medium in which a computer-readable program is stored, wherein the computer-readable program enables a computer to carry out the method for reporting information of D2D communication as claimed in any one of claims 12-16 in a base station.
